(19) Europäisches Patentamt
European Patent Office
Office européen des brevets

(11) **EP 4 367 009 B1**

(12) **FASCICULE DE BREVET EUROPEEN**

(45) Date de publication et mention
de la délivrance du brevet:
**30.07.2025 Bulletin 2025/31**

(21) Numéro de dépôt: **22737916.1**

(22) Date de dépôt: **06.07.2022**

(51) Classification Internationale des Brevets (IPC):
**B62M 6/45** $^{(2010.01)}$

(52) Classification Coopérative des Brevets (CPC):
**B62M 6/45; B60L 15/2045; B60L 50/20;**
B60L 2200/12; B60L 2240/12; B60L 2240/423;
B60L 2250/26

(86) Numéro de dépôt international:
**PCT/EP2022/068796**

(87) Numéro de publication internationale:
**WO 2023/280945 (12.01.2023 Gazette 2023/02)**

(54) **PROCÉDÉ DE COMMANDE D'UN MOTEUR ÉLECTRIQUE D'ASSISTANCE AU PÉDALAGE POUR VÉHICULE À PÉDALIER**

VERFAHREN ZUR STEUERUNG EINES PEDALUNTERSTÜTZENDEN ELEKTROMOTORS FÜR EIN FAHRZEUG MIT EINEM TRETKURBELMECHANISMUS

METHOD FOR CONTROLLING A PEDALLING-ASSIST ELECTRIC MOTOR FOR A VEHICLE HAVING A PEDAL CRANK MECHANISM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.07.2021 FR 2107352**

(43) Date de publication de la demande:
**15.05.2024 Bulletin 2024/20**

(73) Titulaire: **eBikeLabs**
**38000 Grenoble (FR)**

(72) Inventeurs:
• **JAILLET, Léonard**
**38000 Grenoble (FR)**
• **FLECHE, Julien**
**38120 Fontanil-Cornillon (FR)**
• **MARGUET, Raphaël**
**38710 Mens (FR)**

(74) Mandataire: **Hautier IP**
**20, rue de la Liberté**
**06000 Nice (FR)**

(56) Documents cités:
EP-A1- 2 532 576        FR-A1- 2 994 936
US-A1- 2016 251 057    US-A1- 2017 151 997

• TONG CHIA-CHANG TONG ET AL: "Firmware Implementing of a Dual-wheel Drive Electrical Bicycle", 22 December 2011 (2011-12-22), 2011 IEEE/SICE International Symposium on System Integration (SII), XP055895690, ISBN: 978-1-4577-1524-2, Retrieved from the Internet <URL:https://ieeexplore.ieee.org/document/6147639> [retrieved on 20220225], DOI: 10.1109/SII.2011.6147639

**Description**

**DOMAINE TECHNIQUE**

La présente invention concerne le domaine des systèmes et procédés de contrôle pour véhicule à pédalier à assistance électrique. La présente invention concerne plus particulièrement un procédé de commande d'un moteur de véhicule à pédalier. Elle trouve pour application l'adaptation automatique de l'assistance électrique en condition(s) de démarrage difficile (charge lourde, démarrage en côte, etc.).

**ETAT DE LA TECHNIQUE**

Les vélos électriques sont généralement équipés soit d'un capteur de pédalage (ou de rotation), permettant d'obtenir la vitesse de rotation du pédalier du cycliste, soit d'un capteur de couple, permettant d'obtenir non seulement la vitesse de rotation du pédalier, mais aussi des mesures de l'effort fourni par le cycliste.

Lors du démarrage du vélo (avec une vitesse initiale nulle), différentes boucles de régulation peuvent être mises en œuvre en fonction du type de capteur équipant le vélo à assistance électrique.

Avec un capteur de couple, la régulation fournit une commande qui est proportionnelle à l'effort fourni par le cycliste. En cas de démarrage difficile, le cycliste fournit instantanément un effort plus important et la régulation fournit donc une assistante également plus forte qui aidera le cycliste à surmonter la difficulté du démarrage. La présence d'un capteur de couple permet donc une assistance électrique parfaitement adaptée lors d'une phase de démarrage. Un inconvénient de cette solution réside dans le fait qu'un capteur de couple induit un coût significatif. Cette problématique de coût est encore plus prégnante à l'échelle d'une flotte de vélos.

Avec un capteur de pédalage (ou de rotation), la régulation fournit, quelle que soit la situation (démarrage difficile ou non), une commande identique visant à essayer d'amener le vélo à une vitesse cible définie. Ainsi, en cas de démarrage difficile, cette régulation est identique à la situation où la charge est faible et/ou le démarrage se fait sur du plat ou en descente. En conséquence, la dynamique de démarrage du vélo n'est pas la même pour un démarrage aisé ou un démarrage difficile. Dans la situation d'un démarrage difficile, l'accélération peut être trop lente et la vitesse de démarrage trop faible, ce qui peut se traduire par une difficulté du cycliste à tenir l'équilibre. Le document US 2017/151997 A1 divulgue un procédé de commande d'un moteur électrique d'assistance au pédalage pour véhicule à pédalier, selon le préambule de la revendication 1.

Un objet de la présente invention est donc de proposer un procédé de commande d'un moteur électrique d'assistance au pédalage pour véhicule à pédalier qui permette de réduire, voire de supprimer, les inconvénients des solutions connues.

Un autre objet de la présente invention est de proposer un procédé de commande d'un moteur électrique d'assistance au pédalage pour véhicule à pédalier qui permette d'adapter automatiquement l'assistance électrique à la difficulté du démarrage, sans connaître l'effort fourni par le cycliste (donc en l'absence d'un capteur de couple).

Les autres objets, caractéristiques et avantages de la présente invention apparaîtront à l'examen de la description suivante et des dessins d'accompagnement. Il est entendu que d'autres avantages peuvent être incorporés.

**RESUME**

Pour atteindre cet objectif, selon un premier aspect de l'invention, on prévoit un procédé de commande d'un moteur électrique d'assistance au pédalage pour véhicule à pédalier comprenant les étapes suivantes :

- au moins dès lors qu'une rotation du pédalier est détectée, mesurer la vitesse instantanée $V$ du véhicule, et
- si la vitesse instantanée $V$ du véhicule est inférieure à une première valeur seuil $V_{S1}$ prédéterminée, commander le moteur électrique en appliquant une boucle de régulation comprenant, voire consistant en, un processus d'itération d'une fonction f définissant, à chaque instant $n$ et à partir d'une commande de couple $C_{n-1}$ appliquée à l'instant $n-1$ précédent, une commande en couple $C_n$ à appliquer à l'instant $n,$ ladite fonction ayant :

  - comme variable, voire comme unique variable, une différence entre la première valeur seuil $V_{S1}$ et la vitesse instantanée $V$ du véhicule, et
  - comme paramètres, voire comme uniques paramètres, une valeur maximale de commande en couple $C_{max}$ du moteur et un coefficient dit d'accélération $K$ définissant une amplitude maximale de chaque itération.

Ainsi, l'invention selon son premier aspect consiste en un procédé de commande par itération d'une fonction dont une variable, voire l'unique variable, à savoir la vitesse instantanée $V$ du véhicule à pédalier, permet de faire varier la commande en couple du moteur en fonction de la dynamique du véhicule.

EP 4 367 009 B1

Le procédé permet ainsi, par réglages des paramètres de la fonction $f$ du processus d'itération, de garantir au cycliste une assistance suffisante lui permettant d'atteindre une vitesse d'équilibre suffisamment rapidement pour ne pas le mettre en difficulté lorsque les conditions de démarrage sont difficiles.

Ce procédé permet d'apporter une assistance électrique pertinente au cycliste, sans avoir besoin de recourir à un capteur de couple. L'invention permet donc de réduire le coût des vélos à assistance électrique. Elle présente donc un avantage encore plus significatif à l'échelle d'une flotte de vélos.

Un autre aspect de l'invention concerne un produit programme d'ordinateur comprenant des instructions, qui lorsqu'elles sont effectuées par au moins un processeur, exécute au moins les étapes du procédé tel qu'introduit ci-dessus.

Un autre aspect de l'invention concerne une unité de commande (ou un calculateur) d'un moteur, telle qu'un microcontrôleur ou un microprocesseur, conçue pour effectuer au moins les instructions du produit programme d'ordinateur tel qu'introduit ci-dessus.

Un autre aspect de l'invention concerne un véhicule à pédalier comprenant au moins un moteur et une unité de commande (ou un calculateur) telle qu'introduite ci-dessus.

## BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 représente graphiquement cinq exemples de profil de vitesse de démarrage.
La figure 2 représente graphiquement un premier des cinq exemples de profil de vitesse de démarrage illustré sur la figure 1 et l'évolution correspondante de la commande en couple.
La figure 3 représente graphiquement un deuxième des cinq exemples de profil de vitesse de démarrage illustré sur la figure 1 et l'évolution correspondante de la commande en couple.
La figure 4 représente graphiquement un troisième des cinq exemples de profil de vitesse de démarrage illustré sur la figure 1 et l'évolution correspondante de la commande en couple.
La figure 5 représente graphiquement un quatrième des cinq exemples de profil de vitesse de démarrage illustré sur la figure 1 et l'évolution correspondante de la commande en couple.
La figure 6 représente graphiquement le cinquième des cinq exemples de profil de vitesse de démarrage illustré sur la figure 1 et l'évolution correspondante de la commande en couple.
La figure 7 est un ordinogramme d'un mode de réalisation du premier aspect de l'invention.

Les dessins sont donnés à titre d'exemples et ne sont pas limitatifs de l'invention. Ils constituent des représentations graphiques de principe destinées à faciliter la compréhension de l'invention. Même si ces représentations graphiques visent à illustrer des applications pratiques de l'invention, l'échelle de chacun de leurs axes ne vise pas à limiter le domaine d'applications de l'invention.

## DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le moteur est un moteur-roue.

Selon un exemple, avant qu'une rotation du pédalier soit détectée, la commande en couple du moteur est nulle.

Selon un exemple, la première boucle d'itération est comprise dans une boucle conditionnant chaque itération à un non-dépassement de la commande en couple $C_n$ relativement à la valeur maximale de commande en couple $C_{max}$ du moteur ; ladite valeur maximale de commande en couple $C_{max}$ est de préférence sensiblement comprise entre 20 A et 50 ou 60 A.

Selon l'invention, le coefficient d'accélération est un nombre sans dimension sensiblement compris entre 1 et 100, par exemple sensiblement égale à 30,0.

Selon l'invention, ladite fonction $f$ est définie de sorte que chaque itération soit d'une amplitude décroissante :

- à mesure que la vitesse instantanée $V$ du véhicule augmente et
- jusqu'à être nulle lorsque la vitesse instantanée $V$ du véhicule atteint la première valeur seuil $V_{S1}$.

Selon un exemple, la première valeur seuil $V_{S1}$ est sensiblement comprise entre 2 et 10 km/h, de préférence sensiblement comprise entre 4 et 8 km/h.

3

Selon un exemple, si la vitesse instantanée $V$ du véhicule est supérieure à une deuxième valeur seuil $V_{S2}$ prédéterminée, la commande du moteur électrique comprend l'application conjointe de la première boucle de régulation et d'une deuxième boucle de régulation, la deuxième valeur seuil $V_{S2}$ étant inférieure à la première valeur seuil $V_{S1}$ et de préférence sensiblement comprise entre 2 km/h et 6 km/h, et de préférence sensiblement égale à 4 km/h.

Selon l'invention, ladite fonction $f$ prend la forme suivante :

$$f = P(V)\frac{Cmax}{K},$$

où

- $C_{max}$ est la valeur maximale de commande en couple du moteur,
- $K$ est le coefficient d'accélération $K$ définissant l'amplitude maximale de chaque itération, et
- $P(V)$ est définie de sorte que chaque itération soit d'une amplitude décroissante :

      i. à mesure que la vitesse instantanée $V$ du véhicule augmente et

      ii. jusqu'à être nulle lorsque la vitesse instantanée $V$ du véhicule atteint la première valeur seuil $V_{S1}$.

Selon l'exemple précédent, $P(V) = \left(\frac{V_{S1}-V}{V_{S1}}\right)^m$, avec $m$ un entier compris entre 1 et 4, de préférence avec $m = 2$.

Selon un exemple, la vitesse instantanée $V$ du véhicule à pédalier est calculée, par une unité de commande (ou un calculateur), en fonction de la mesure d'une rotation du moteur et en référence à une base de données prédéterminée stockée par l'unité de commande. La mesure de la rotation du moteur est de préférence réalisée avec une vitesse d'échantillonnage haute, de préférence supérieure à 100Hz. La vitesse instantanée $V$ du véhicule à pédalier ainsi obtenue est d'une précision suffisante pour permettre un contrôle fin et réactif de l'assistance électrique.

Selon un exemple, la rotation du pédalier est détectée par un capteur de pédalage (ou de rotation). Le capteur de pédalage (ou de rotation) permet en outre de connaître la vitesse de pédalage.

Selon un exemple, le véhicule à pédalier est exempt d'un capteur de couple.

On entend par un paramètre « sensiblement égal/supérieur/inférieur à » une valeur donnée que ce paramètre est égal/supérieur/inférieur à la valeur donnée, à plus ou moins 20 %, voire 10 %, près de cette valeur. On entend par un paramètre « sensiblement compris entre » deux valeurs données que ce paramètre est au minimum égal à la plus petite valeur donnée, à plus ou moins 20 %, voire 10 %, près de cette valeur, et au maximum égal à la plus grande valeur donnée, à plus ou moins 20 %, voire 10 %, près de cette valeur.

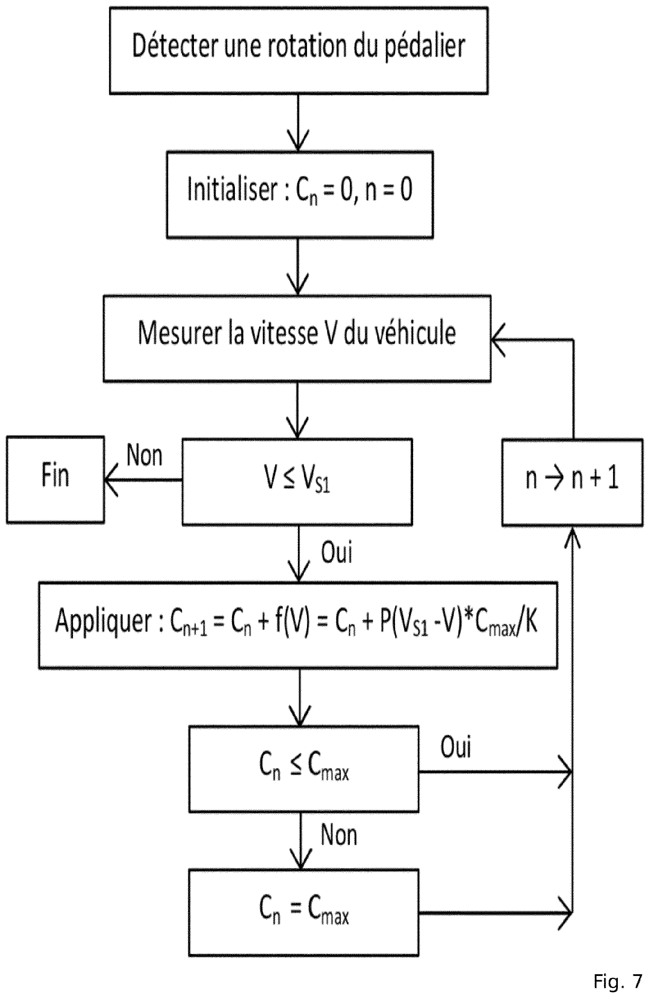

Le premier aspect de l'invention concerne un procédé de commande d'un moteur électrique d'assistance au pédalage pour véhicule à pédalier. Le procédé est essentiellement tel qu'il comprend les étapes suivantes, illustrées sur la figure 7 :

- au moins dès lors qu'une rotation du pédalier est détectée, mesurer la vitesse instantanée $V$ du véhicule, et
- si la vitesse instantanée $V$ du véhicule est inférieure à une première valeur seuil $V_{S1}$ prédéterminée, commander le moteur électrique en appliquant une première boucle de régulation comprenant un processus d'itération d'une fonction $f$ définissant, à chaque instant $n$ et à partir d'une commande en couple $C_{n-1}$ appliquée à l'instant $n-1$ précédent, une commande en couple $C_n$ à appliquer à l'instant $n$.

La fonction $f$ a comme variable, une différence entre la première valeur seuil $V_{S1}$ et la vitesse instantanée $V$ du véhicule. Équivalemment, la fonction $f$ a comme variable la vitesse instantanée $V$ du véhicule, la première valeur seuil $V_{S1}$ étant considérée comme un paramètre prédéterminé de la fonction $f$.

Une réécriture mathématique de ce qui précède et en accord avec l'invention est donnée de la façon suivante :

$$C_n - C_{n-1} = f(V_{S1} - V).$$

La fonction $f$ a en outre comme paramètres :

      i. une valeur maximale de commande en couple $C_{max}$ du moteur et

      ii. un coefficient dit d'accélération $K$ définissant une amplitude maximale de chaque itération ; comme nous le verrons plus bas, l'amplitude de chaque itération est pondérée en fonction de la différence entre la première valeur seuil $V_{S1}$ et la vitesse instantanée $V$ du véhicule.

La valeur maximale de commande en couple $C_{max}$ du moteur correspond à une valeur d'intensité maximale de courant d'alimentation du moteur. Le coefficient d'accélération $K$ définit, de façon directement ou indirectement proportionnelle, le nombre minimum d'itérations qu'effectuera la boucle de régulation avant d'atteindre :

- soit la première valeur seuil $V_{S1}$,
- soit une commande en couple $C_n$ égale à la valeur maximale de commande en couple $C_{max}$.

En alternative, mais de façon strictement équivalente, la fonction $f$ peut être considérée comme ayant, pour variable, la vitesse instantanée $V$ du véhicule et, pour paramètres, la valeur maximale de commande en couple $C_{max}$, le coefficient d'accélération $K$ et la première valeur seuil $V_{S1}$.

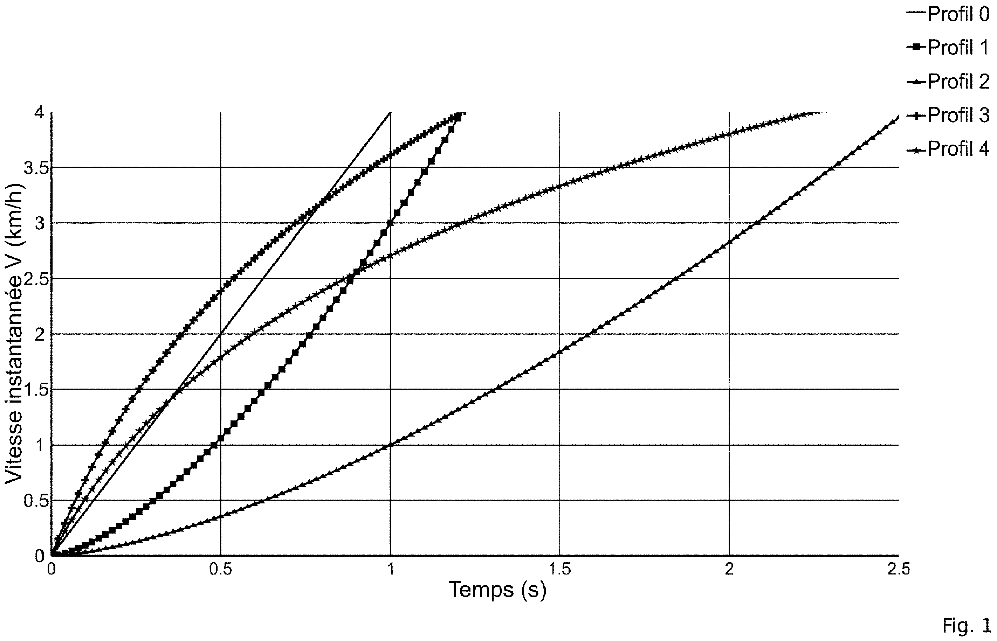

A titre purement illustratif, un mode de réalisation du procédé selon le premier aspect de l'invention est décrit ci-dessous en référence aux figures 1 à 6.

Selon ce mode de réalisation, la valeur maximale de commande en couple $C_{max}$ est égale à 35 A (Ampères) et la valeur du coefficient d'accélération $K$ est égale à 30,0.

Toutefois, ces valeurs données des deux paramètres de la fonction $f$ ne sont pas limitatives du procédé selon le premier aspect de l'invention.

Plus particulièrement, la valeur maximale de commande en couple $C_{max}$ peut être renseignée par le fabricant du moteur ; elle est typiquement sensiblement comprise entre 20 A et 50 ou 60 A. Quant à la valeur du coefficient d'accélération $K$, elle peut varier au cas par cas, notamment en fonction de la fréquence à laquelle l'unité de commande (ou le calculateur) fonctionne, en particulier pour calculer la vitesse instantanée $V$ du véhicule à pédalier. Lorsque le coefficient d'accélération $K$ est égal à 30,0, l'amplitude maximale de chaque itération est alors égale à 1/30 de la valeur maximale de commande en couple $C_{max}$, et plus d'une trentaine d'itérations de la boucle de régulation sont nécessaires pour que la commande en couple $C_n$ atteigne la valeur maximale de commande en couple $C_{max}$. Notons ici que, comme cela apparaîtra clairement au vu du descriptif ci-dessous des figures, il est possible que la boucle de régulation ne conduise pas à l'atteinte d'une commande en couple $C_n$ égale à la valeur maximale de commande en couple $C_{max}$, si la vitesse instantanée $V$ du véhicule atteint ou dépasse la première valeur seuil $V_{S1}$ pour une valeur de commande en couple $C_n$ inférieure à la valeur maximale de commande en couple $C_{max}$.

En outre, selon le mode de réalisation illustré sur les figures 1 à 6, la première valeur seuil $V_{S1}$ est fixée égale à 4 km/h. Là encore, cette valeur de la première valeur seuil $V_{S1}$ n'est pas limitative du procédé selon le premier aspect de l'invention. La première valeur seuil $V_{S1}$ peut en effet être sensiblement comprise entre 2 et 10 km/h, de préférence sensiblement comprise entre 4 et 8 km/h.

Notons ici que, comme discuté en introduction, le véhicule à pédalier concerné par la présente invention, s'il est de préférence exempt d'un capteur de couple, est en revanche équipée d'un capteur de pédalage, aussi appelée capteur de rotation, moins onéreux qu'un capteur de couple. Par le biais du capteur de pédalage, il est possible d'une part de détecter une rotation du pédalier, d'autre part de mesurer la vitesse de cette rotation, comme illustré sur la figure 7.

La vitesse instantanée $V$ du véhicule peut être calculée par l'unité de commande (ou équivalemment le calculateur) du véhicule à pédalier. La façon dont ce calcul est réalisé est connue en soi. Elle peut impliquer une base de données prédéterminée stockée par l'unité de commande ou consultable à distance par ladite unité. La mesure de la rotation du moteur est de préférence réalisée avec une fréquence d'échantillonnage haute. De préférence, ladite fréquence d'échantillonnage est supérieure à 100Hz et n'est pas nécessairement supérieure à 16kHz ; elle est typiquement égale à 2000 Hz. La fréquence d'échantillonnage de la mesure de la rotation du moteur est potentiellement supérieure à la fréquence à laquelle le calcul de l'assistance est réalisé ; cette dernière étant inversement proportionnelle au laps de temps entre deux instants n-1 et $n$. Plus particulièrement, la fréquence du calcul de l'assistance peut être réalisée à une fréquence beaucoup plus faible, et par exemple au moins dix fois plus faible que la fréquence d'échantillonnage de la mesure de la rotation du moteur. Typiquement, la fréquence du calcul de l'assistance peut être réalisé à une fréquence de 100 Hz. A titre illustratif, le processeur de l'unité de commande peut fonctionner à une fréquence de 16 kHz. Ainsi, sont garantis non seulement une stabilisation suffisamment rapide des valeurs de la vitesse instantanée $V$ du véhicule, mais encore un nombre suffisant de calculs de l'assistance pour que l'évolution de la vitesse instantanée $V$ du véhicule apparaisse comme continue, au moins durant la période de temps où la première boucle de régulation est à appliquer, quelle que soit la dynamique du véhicule considérée. En évitant ainsi des à-coups de régulation qui seraient susceptibles de surprendre le cycliste, voire de le déstabiliser, l'on s'assure d'une régulation douce de l'assistance électrique et du confort du cycliste.

Le mode de réalisation illustré sur les figures 1 à 6 considère en outre la forme suivante de la fonction $f$ :

$$f = P(V)\frac{Cmax}{K}, \text{ où } P(V) = \left(\frac{V_{S1}-V}{V_{S1}}\right)^2$$

Toutefois, cette forme de la fonction $f$ indiquée ci-dessus n'est pas limitative du procédé selon le premier aspect de l'invention. Plus généralement, la fonction *f*, et plus particulièrement la fonction *P(V)*, peut être définie de sorte que chaque itération soit d'une amplitude décroissante :

- à mesure que la vitesse instantanée *V* du véhicule augmente et
- jusqu'à être nulle lorsque la vitesse instantanée *V* du véhicule atteint la première valeur seuil $V_{S1}$.

En outre, la fonction *P(V)* est de préférence normée, en ce sens qu'elle évolue entre une valeur maximale égale à 1 et une valeur minimale égale à 0.

Une expression plus générale de la fonction *P(V)* relativement à celle donnée ci-dessus est la suivante :

$$P(V) = \left(\frac{V_{S1}-V}{V_{S1}}\right)^m,$$

où m est un entier compris entre 1 et 4.

La fonction P(V) agit comme une fonction de pondération de l'amplitude maximale de chaque itération donnée par $\frac{Cmax}{K}$, en fonction de la vitesse instantanée *V* du véhicule et relativement à la première valeur seuil $V_{S1}$. Elle permet donc de modifier l'évolution de la commande en couple en fonction de la dynamique du véhicule à pédalier.

La figure 1 montre justement cinq dynamiques du véhicule à pédalier différentes entre elles. Chacune de ces cinq dynamiques est jugée conforme à une évolution du profil de vitesse effectivement observable lors de l'usage du véhicule à pédalier. Pour autant, ces cinq dynamiques sont théoriques ; les envisager permet d'illustrer la réponse correspondante du procédé selon le premier aspect de l'invention pour chacune d'entre elles.

La figure 1 illustre plus particulièrement cinq profils de vitesse, avec des dynamiques différentes en termes de forme et d'accélération ; les profils correspondant à des séquences de démarrage, avec une vitesse évoluant depuis 0 km/h (arrêt du véhicule) jusqu'à 4 km/h (i.e. la valeur donnée pour la première valeur seuil $V_{S1}$ qui peut correspondre ou être proportionnelle à une vitesse d'équilibre du cycliste sur le véhicule, notamment lorsque ce dernier comporte deux roues).

En dehors du profil de vitesse linéaire, deux des cinq profils de vitesse illustrés traduisent l'hypothèse d'une évolution logarithmique de la vitesse, et deux autres traduisent l'hypothèse d'une évolution exponentielle de la vitesse. Parmi les deux profils de vitesse logarithmiques, un premier peut être dit 'lent' (il est situé sous l'autre des deux profils de vitesse logarithmique) et le second peut être dit 'rapide' (il est situé au-dessus de l'autre des deux profils de vitesse logarithmique). Il en va de même des deux profils de vitesse dits 'exponentiels'.

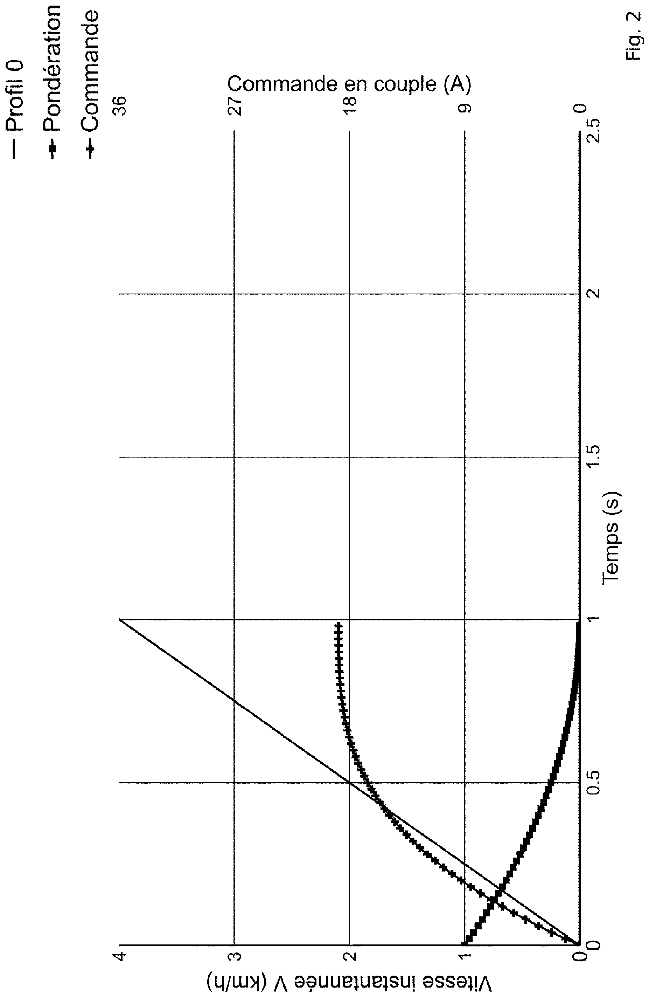

Les figures 2 à 6 montrent l'évolution de la commande en couple $C_n$ (courbes avec symboles en croix grecque) pour chacun des profils de vitesse illustrés sur la figure 1. Chaque profil y est plus particulièrement illustré par une courbe fine et continue sans symbole.

La figure 2 montre l'évolution de la commande en couple $C_n$ pour un profil de vitesse traduisant l'hypothèse d'une évolution linéaire de la vitesse.

Notons que, sur chacune de ces figures 2 à 6, sont également illustrées l'évolution de la fonction *P(V)* dite de pondération de l'amplitude maximale d'itération $\frac{Cmax}{K}$ (courbes avec symboles carré).

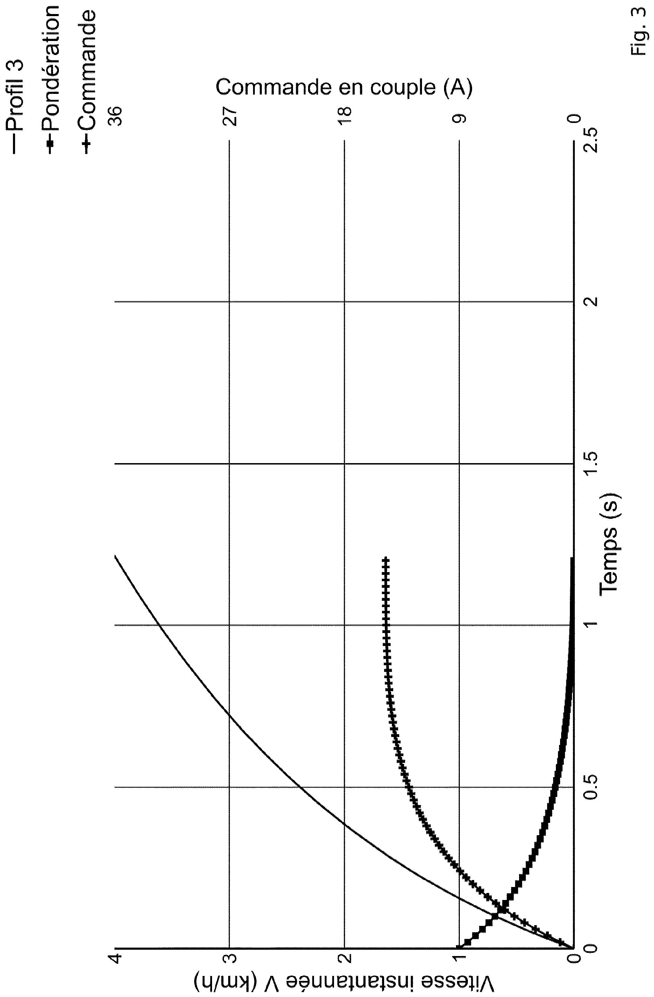

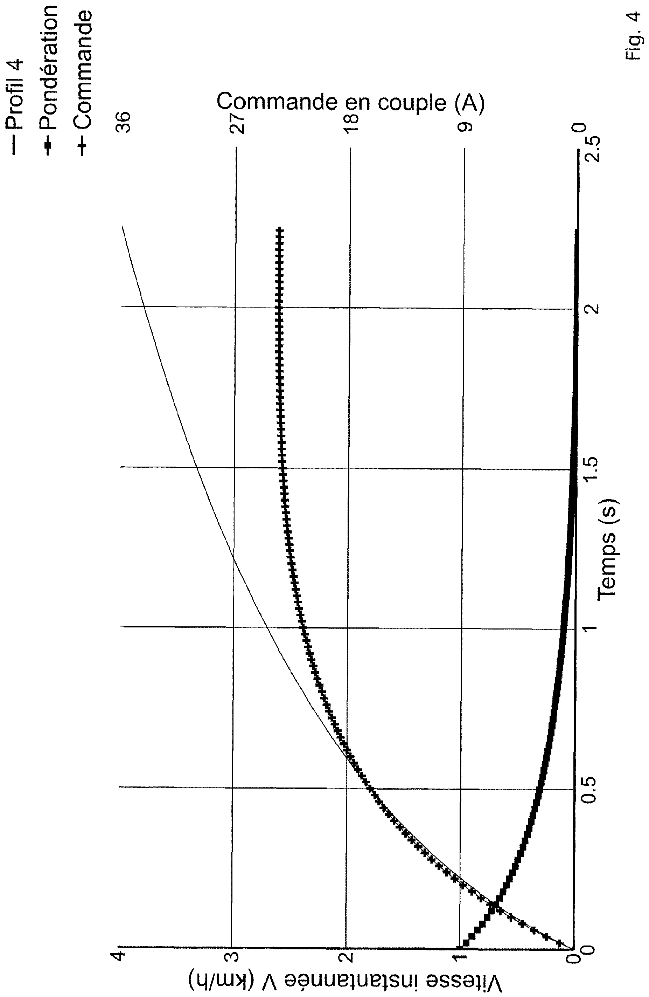

La figure 3 montre plus particulièrement l'évolution de la commande en couple $C_n$ pour le profil de vitesse dit 'logarithmique' et 'rapide' ; et la figure 4 montre l'évolution de la commande en couple $C_n$ pour le profil de vitesse 'logarithmique' et 'lent'. On peut tout d'abord observer qu'aucune de ces deux évolutions ne conduit à l'atteinte de la valeur de commande en couple maximale $C_{max}$ (= 35 A). Une comparaison de ces deux évolutions entre elles montre que le véhicule à pédalier parvient plus rapidement à la première valeur seuil $V_{S1}$ lorsque le profil de vitesse est 'rapide', mais que la commande en couple croît plus rapidement lorsque le profil de vitesse est 'lent'.

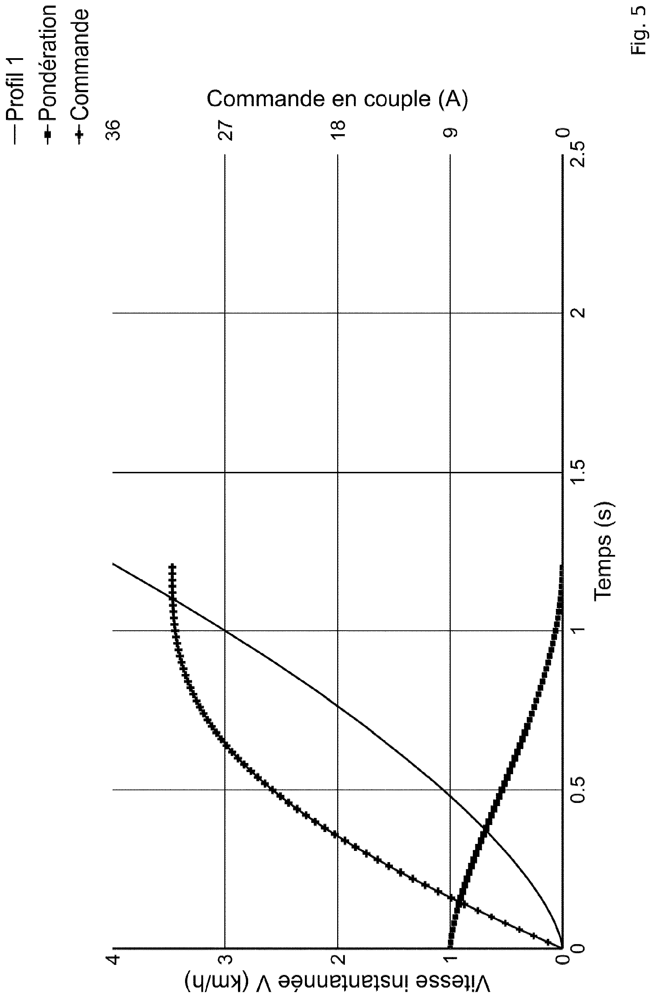

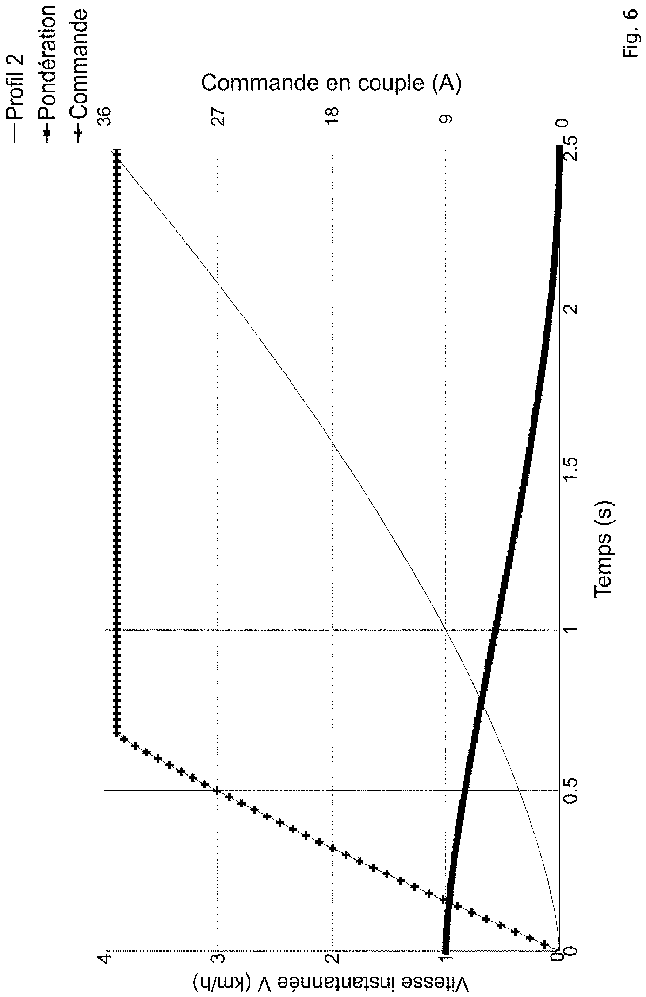

La figure 5 montre l'évolution de la commande en couple $C_n$ pour le profil de vitesse dit 'exponentiel' et 'rapide', tandis que la figure 6 montre l'évolution de la commande en couple $C_n$ pour le profil de vitesse 'exponentiel' et 'lent'. À nouveau, on observe que la commande en couple croît plus rapidement lorsque le profil de vitesse est 'lent'. En outre, si, pour le profil de vitesse 'exponentiel' et 'rapide', la commande en couple atteint de façon quasi-asymptotique, une valeur proche de la valeur maximale de commande en couple $C_{max}$ (= 35 A), l'atteinte de cette dernière est beaucoup plus rapide pour le profil de vitesse 'exponentiel' et 'lent'. En effet, dans ce dernier cas, la vitesse instantanée V du véhicule à pédalier restant relativement faible sur un temps relativement long (de l'ordre d'une seconde) suivant la détection de la rotation du pédalier, les amplitudes des premières itérations de la boucle de régulation sont relativement proches de l'amplitude maximale de chaque itération, amenant ainsi la commande en couple très rapidement (en moins de trois quart de seconde) à sa valeur maximale.

Il ressort de ce dernier exemple que, comme illustré sur la figure 7, la première boucle d'itération est comprise dans/ou comprend en outre, une boucle conditionnant chaque itération à un non-dépassement de la commande en couple $C_n$ relativement à la valeur maximale de commande en couple $C_{max}$ du moteur.

Un autre avantage du procédé selon le premier aspect de l'invention vient en considérant que l'application de la première boucle de régulation décrite ci-dessus en référence aux figures 1 à 7 n'est pas exclusive de l'application d'une autre boucle de régulation, venant compléter la première, avant éventuellement de la remplacer lorsque la vitesse instantanée $V$ dépasse la première valeur seuil $V_{S1}$. Ainsi, si la vitesse instantanée $V$ du véhicule est supérieure à une deuxième valeur seuil $V_{S2}$ prédéterminée, la commande du moteur électrique peut comprendre l'application, conjointement à la première boucle de régulation, d'une deuxième boucle de régulation. La deuxième valeur seuil $V_{S2}$ est alors définie inférieure à la première valeur seuil $V_{S1}$ Sans cela, la première boucle de régulation finirait d'être appliquée avant que ne soit applicable la deuxième boucle de régulation ; ce dernier cas étant pour autant tout à fait envisageable. Par exemple, la deuxième valeur seuil $V_{S2}$ est sensiblement comprise entre 2 km/h et 6 km/h, et de préférence sensiblement égale à 4 km/h.

Dans la mesure où les différents paramètres suscités sont correctement réglés, un tel réglage étant jugé du ressort de l'homme du métier et pouvant être réalisé de façon homogène sur une flotte de vélos identiques entre eux, il ressort de ce qui précède que le procédé selon le premier aspect de l'invention permet d'obtenir un comportement agréable du véhicule à pédalier pour le cycliste, ce comportement étant caractérisé par :

- une accélération pas trop brutale, lorsque le démarrage n'est pas difficile (comme par exemple un démarrage sur le plat) ;
- une accélération suffisante pour amener rapidement le véhicule à pédalier à une vitesse d'équilibre correspondante ou proportionnelle à la première valeur seuil $V_{S1}$, lorsque le démarrage est difficile, notamment quel que soit le type de charge rencontrée (comme par exemple un démarrage en côte et/ou d'un véhicule lourdement chargé et/ou en vent de face).

**Revendications**

1. Procédé de commande d'un moteur électrique d'assistance au pédalage pour véhicule à pédalier comprenant les étapes suivantes :

   • au moins dès lors qu'une rotation du pédalier est détectée, mesurer la vitesse instantanée $V$ du véhicule, et
   • si la vitesse instantanée $V$ du véhicule est inférieure à une première valeur seuil $V_{S1}$ prédéterminée, commander le moteur électrique en appliquant une première boucle de régulation comprenant un processus d'itération d'une fonction $f$ définissant, à chaque instant $n$ et à partir d'une commande en couple $C_{n-1}$ appliquée à l'instant $n-1$ précédent, une commande en couple $C_n$ à appliquer à l'instant $n$,

   ladite fonction ayant :

   • comme variable, une différence entre la première valeur seuil $V_{S1}$ et la vitesse instantanée $V$ du véhicule, et
   • comme paramètres :

      i. une valeur maximale de commande en couple $C_{max}$ du moteur et
      ii. un coefficient dit d'accélération $K$ définissant une amplitude maximale de chaque itération, et le processus **caractérisé par** les formulations suivantes:

      dans lequel ladite fonction $f$ prend la forme suivante :

$$f = P(V)\frac{Cmax}{K},$$

   où

      $C_{max}$ est la valeur maximale de commande en couple du moteur,
      $K$ est le coefficient d'accélération définissant l'amplitude maximale de chaque itération, et
      $P(V)$ est définie de sorte que chaque itération soit d'une amplitude décroissante :

         • à mesure que la vitesse instantanée $V$ du véhicule augmente et

jusqu'à être nulle lorsque la vitesse instantanée $V$ du véhicule atteint la première valeur seuil $V_{S1}$, et

$$P(V) = \left(\frac{V_{S1}-V}{V_{S1}}\right)^m$$

dans lequel , avec m un entier compris entre 1 et 4, de préférence avec $m = 2$, dans lequel ladite fonction $f$ est définie de sorte que chaque itération soit d'une amplitude décroissante :

- à mesure que la vitesse instantanée $V$ du véhicule augmente et
- jusqu'à être nulle lorsque la vitesse instantanée $V$ du véhicule atteint la première valeur seuil $V_{s1}$,

- dans lequel le coefficient d'accélération K est un nombre sans dimension sensiblement compris entre 1 et 100,

et dans lequel la première boucle de régulation comprenant un processus d'itération suivant:

$$C_n - C_{n-1} = f\left(V_{S1}-V\right).$$

2. Procédé selon l'une quelconque des revendications précédentes, dans lequel ladite fonction a, comme unique variable, la différence entre la première valeur seuil $V_{S1}$ et la vitesse instantanée $V$ du véhicule.

3. Procédé selon l'une quelconque des revendications précédentes dans lequel, avant qu'une rotation du pédalier soit détectée, la commande en couple du moteur est nulle.

4. Procédé selon l'une quelconque des revendications précédentes, dans lequel la première boucle d'itération est comprise dans une boucle conditionnant chaque itération à un non-dépassement de la commande en couple $C_n$ relativement à la valeur maximale de commande en couple $C_{max}$ du moteur.

5. Procédé selon la revendication précédente, dans lequel ladite valeur maximale de commande en couple $C_{max}$ est sensiblement comprise entre 20 A et 50 ou 60 A.

6. Procédé selon l'une quelconque des revendications précédentes, dans lequel le coefficient d'accélération K est sensiblement égale à 30,0.

7. Procédé selon l'une quelconque des revendications précédentes, dans lequel la première valeur seuil $V_{S1}$ est sensiblement comprise entre 2 et 10 km/h, de préférence sensiblement comprise entre 4 et 8 km/h.

8. Procédé selon l'une quelconque des revendications précédentes, dans lequel, si la vitesse instantanée $V$ du véhicule est supérieure à une deuxième valeur seuil $V_{S2}$ prédéterminée, la commande du moteur électrique comprend l'application conjointe de la première boucle de régulation et d'une deuxième boucle de régulation, la deuxième valeur seuil $V_{S2}$ étant inférieure à la première valeur seuil $V_{S1}$ et de préférence sensiblement comprise entre 2 km/h et 6 km/h, et de préférence sensiblement égale à 4 km/h.

9. Programme d'ordinateur comprenant des instructions, qui lorsqu'elles sont effectuées par au moins un processeur, exécute au moins les étapes du procédé selon l'une quelconque des revendications précédentes.

10. Unité de commande d'un moteur conçue pour effectuer au moins les instructions du programme d'ordinateur selon la revendication précédente.

11. Véhicule à pédalier comprenant au moins un moteur et une unité de commande selon la revendication précédente.

**Patentansprüche**

1. Verfahren zur Steuerung eines pedalunterstützenden Elektromotors für ein Fahrzeug mit einem Tretkurbelmechanismus, das die folgenden Schritte umfasst:

- mindestens sobald eine Drehung des Tretkurbelmechanismus erkannt wird, Messen der momentanen Geschwindigkeit $V$ des Fahrzeugs, und
• wenn die momentane Geschwindigkeit $V$ des Fahrzeugs kleiner als ein erster vorbestimmter Schwellenwert $V_{S1}$ ist, Steuern des Elektromotors, indem eine erste Regelschleife angewendet wird, die einen Iterationsprozess einer Funktion $f$ umfasst, die zu jedem Zeitpunkt $n$ und ausgehend von einer auf den vorhergehenden Zeitpunkt $n-1$ angewendeten Drehmomentsteuerung $C_{n-1}$ eine auf den Zeitpunkt $n$ anzuwendende Drehmomentsteuerung $C_n$ definiert, wobei die Funktion Folgendes aufweist:
• als Variable eine Differenz zwischen dem ersten Schwellenwert $V_{S1}$ und der momentanen Geschwindigkeit $V$ des Fahrzeugs, und
• als Parameter:

   i. einen maximalen Drehmomentsteuerwert $C_{max}$ des Motors und
   ii. einen Beschleunigungskoeffizienten $K$, der eine maximale Amplitude jeder Iteration definiert, und den Prozess, der durch die folgenden Formulierungen gekennzeichnet ist:

   wobei die Funktion f die folgende Form annimmt:

$$f = P(V)\frac{Cmax}{K},$$

   wobei)
   $C_{max}$ der maximale Drehmomentsteuerwert des Motors ist,
   K der Beschleunigungskoeffizient ist, der die maximale Amplitude jeder Iteration definiert, und
   $P(V)$ so definiert ist, dass jede Iteration eine abnehmende Amplitude hat:

      • mit zunehmender momentaner Geschwindigkeit $V$ des Fahrzeugs und bis zu Null, wenn die momentane Geschwindigkeit V des Fahrzeugs den ersten Schwellenwert $V_{S1}$ erreicht, und

   wobei $$P(V) = \left(\frac{V_{S1}-V}{V_{S1}}\right)^m$$ $m$ eine ganze Zahl zwischen 1 und 4 ist, wobei vorzugsweise $m=2$, wobei die Funktion $f$ so definiert ist, dass jede Iteration eine abnehmende Amplitude hat:

      • mit zunehmender momentaner Geschwindigkeit V des Fahrzeugs und
      • bis zu Null, wenn die momentane Geschwindigkeit V des Fahrzeugs den ersten Schwellenwert $V_{S1}$ erreicht,

         - wobei der Beschleunigungskoeffizient K eine dimensionslose Zahl ist, die im Wesentlichen zwischen 1 und 100 liegt,

   und wobei die erste Regelschleife einen folgenden Iterationsprozess umfasst:

$$C_n\text{-}C_{n-1} = f(V_{S1}\text{-}V).$$

2. Verfahren nach einem der vorhergehenden Ansprüche, wobei die Funktion als einzige Variable die Differenz zwischen dem ersten Schwellenwert $V_{S1}$ und der momentanen Geschwindigkeit V des Fahrzeugs aufweist.

3. Verfahren nach einem der vorhergehenden Ansprüche, wobei, bevor eine Drehung des Tretkurbelmechanismus erkannt wird, die Drehmomentsteuerung des Motors null ist.

4. Verfahren nach einem der vorhergehenden Ansprüche, wobei die erste Iterationsschleife in einer Schleife enthalten ist, die jede Iteration an eine Nichtüberschreitung der Drehmomentsteuerung $C_n$ in Bezug auf den maximalen Drehmomentsteuerungswert $C_{max}$ des Motors knüpft.

5. Verfahren nach dem vorhergehenden Anspruch, wobei der maximale Drehmomentsteuerwert $C_{max}$ im Wesentlichen zwischen 20 A und 50 oder 60 A liegt.

**6.** Verfahren nach einem der vorhergehenden Ansprüche, wobei der Beschleunigungskoeffizient $K$ im Wesentlichen gleich 30,0 ist.

**7.** Verfahren nach einem der vorhergehenden Ansprüche, wobei der erste Schwellenwert $V_{S1}$ im Wesentlichen zwischen 2 und 10 km/h, vorzugsweise im Wesentlichen zwischen 4 und 8 km/h, liegt.

**8.** Verfahren nach einem der vorhergehenden Ansprüche, wobei, wenn die momentane Geschwindigkeit $V$ des Fahrzeugs größer als ein zweiter vorbestimmter Schwellenwert $V_{S2}$ ist, die Steuerung des Elektromotors das gemeinsame Anwenden der ersten Regelschleife und einer zweiten Regelschleife umfasst, wobei der zweite Schwellenwert $V_{S2}$ kleiner ist als der erste Schwellenwert $V_{S1}$ und vorzugsweise im Wesentlichen zwischen 2 km/h und 6 km/h liegt und vorzugsweise im Wesentlichen gleich 4 km/h beträgt.

**9.** Computerprogrammprodukt, das Anweisungen umfasst, die, wenn sie von mindestens einem Prozessor ausgeführt werden, mindestens die Schritte des Verfahrens nach einem der vorhergehenden Ansprüche ausführen.

**10.** Steuereinheit eines Motors, die dazu ausgelegt ist, mindestens die Anweisungen des Computerprogramms nach dem vorhergehenden Anspruch auszuführen.

**11.** Fahrzeug mit einem Tretkurbelmechanismus, das mindestens einen Motor und eine Steuereinheit nach dem vorhergehenden Anspruch umfasst.

**Claims**

**1.** A method for controlling a pedalling-assist electric motor for a vehicle having a pedal crank mechanism and comprising the following steps:

• at least when rotation of the pedal crank mechanism is detected, of measuring the instantaneous speed $V$ of the vehicle, and
• if the instantaneous speed $V$ of the vehicle is below a first threshold value $V_{S1}$, of operating the electric motor by applying a control loop comprising a process of iterating a function $f$ defining, at each instant n and from a torque command $C_{n-1}$ applied at the preceding instant $n$-$1$, a torque command $C_n$ that is to be applied at the instant $n$,

said function having:

• by way of variable, a difference between the first threshold value $V_{S1}$ and the instantaneous speed $V$ of the vehicle, and
• as parameters:

i. a maximum torque command value $C_{max}$ of the motor and
ii. a so-called acceleration coefficient $K$ defining a maximum amplitude of each iteration, and the process **characterised by** the following formulations:

wherein said function $f$ takes the following form:

$$f = P(V)\frac{Cmax}{K},$$

où
$C_{max}$ is the maximum torque command value of the motor,
$K$ is the acceleration coefficient defining the maximum amplitude of each iteration, and
$P(V)$ is defined such that each iteration is of decreasing amplitude:

• as the instantaneous speed $V$ of the vehicle increases until it is zero when the instantaneous speed

$V$ of the vehicle reaches the first threshold value $V_{S1}$, and wherein $P(V) = \left(\frac{V_{S1}-V}{V_{S1}}\right)^{m}$, with $m$ an integer between 1 and 4, preferably with $m = 2$,

wherein said function $f$ is defined such that each iteration is of decreasing amplitude:

- as the instantaneous vehicle speed $V$ increases and
- until it is zero when the instantaneous vehicle speed $V$ reaches the first threshold value $V_{S1}$,

    - wherein the acceleration coefficient K is a dimensionless number substantially between 1 and 100,

and wherein the first control loop comprising a following iteration process:

$$C_n - C_{n-1} = f(V_{S1} - V) .$$

2. Method according to any one of the preceding claims, wherein said function has, as the only variable, the difference between the first threshold value $V_{S1}$ and the instantaneous speed $V$ of the vehicle.

3. Method according to any one of the preceding claims, wherein, before a rotation of the pedal crank mechanism is detected, the torque command of the motor is zero.

4. Method according to any one of the preceding claims, wherein the first iteration loop is included in a loop conditioning each iteration to a non-exceedance of the torque command $C_n$ relative to the maximum torque control value $C_{max}$ of the motor.

5. Method according to the preceding claim, wherein said maximum torque command value $C_{max}$ is substantially between 20 A and 50 or 60 A.

6. Method according to any one of the preceding claims, wherein the acceleration coefficient K is substantially equal to 30.0.

7. Method according to any one of the preceding claims, wherein the first threshold value $V_{S1}$ is substantially between 2 and 10 km/h, preferably substantially between 4 and 8 km/h.

8. Method according to any one of the preceding claims, wherein, if the instantaneous speed $V$ of the vehicle is greater than a second predetermined threshold value $V_{S2}$, the control of the electric motor comprises the joint application of the first control loop and a second control loop, the second threshold value $V_{S2}$ being lower than the first threshold value $V_{S1}$ and preferably substantially between 2 km/h and 6 km/h, and preferably substantially equal to 4 km/h.

9. Computer program product comprising instructions which, when carried out by at least one processor, executes at least the steps of the method according to any one of the preceding claims.

10. A motor control unit designed to perform at least the instructions of the computer program according to the preceding claim.

11. A vehicle having a pedal crank mechanism comprising at least one motor and a control unit according to the preceding claim.

Fig. 1

EP 4 367 009 B1

Fig. 2

EP 4 367 009 B1

Fig. 3

EP 4 367 009 B1

Fig. 4

EP 4 367 009 B1

Fig. 5

Fig. 6

Détecter une rotation du pédalier

Initialiser : $C_n = 0$, $n = 0$

Mesurer la vitesse V du véhicule

$V \leq V_{S1}$

Non → Fin

Oui

Appliquer : $C_{n+1} = C_n + f(V) = C_n + P(V_{S1} - V) * C_{max}/K$

$C_n \leq C_{max}$

Oui →

Non →

$C_n = C_{max}$

$n \rightarrow n + 1$

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017151997 A1